# DEMANDE DE BREVET EUROPEEN

(11) **EP 1 315 000 A1**
(43) Date de publication de la demande: **28.05.2003**
(21) Numéro de dépôt: 02102572.1
(22) Date de dépôt: 13.11.2002
(51) Int. Cl.: G01S 13/42, G01S 13/72

(54) **Procédé de régulation de charge d'un radar**

(30) Priorité: 26.11.2001 FR 0115521
(71) Demandeur: Thales, 75008 Paris (FR)
(72) Inventeur: Barbaresco, Frédéric, 94117 CX, Arcueil (FR); Monnier, Bernard, 94117 CX, Arcueil (FR)
(74) Mandataire: Lucas, Laurent Jacques

(57) **Abrégé**

La présente invention concerne les techniques de régulation de la charge d'un radar.

Le procédé de régulation selon l'invention est destiné à être mis en oeuvre avant l'étape d'ordonnancement en ligne. Il comprend au moins les étapes suivantes :
(a) une étape de simulation (SIM), au cours de laquelle on simule sur une à plusieurs trames l'ordonnancement de demandes de pointages, ces demandes de pointages comprenant des premières demandes de pointages non urgents (P1) qui sont destinés à être joués de manière périodique par le radar, et des secondes demandes de pointages urgents fictives (P2) qui sont générées (GA) de manière aléatoire, le résultat de la simulation étant positif si les premières et les secondes demandes de pointages peuvent tous être ordonnancées, le résultat étant négatif sinon ;
(b) une étape de réduction de charge (RED) si le résultat de la simulation est négatif, la réduction de la charge étant obtenue en agissant sur les premières demandes de pointages non urgents.

L'invention s'applique notamment à la régulation de charge d'un radar multifonction à balayage électronique.

## Description

La présente invention concerne les techniques de régulation de la charge d'un radar. Elle s'applique notamment à la régulation de charge d'un radar multifonction à balayage électronique.

Les radars multifonction à balayage électronique peuvent dépointer leurs faisceaux de façon instantanée dans un cône d'axe perpendiculaire au plan de l'antenne. Ils possèdent différents modes de fonctionnement : antenne tournante, antenne arrêtée, mode mixte, antenne multi-dales, .... Les radars multifonction effectuent plusieurs types de pointages correspondant à différentes missions opérationnelles : la détection (pointages de veille), le pistage de cibles (pointages de poursuite), l'identification, le guidage de missile... Pour que le fonctionnement de ces radars soit optimal, il faut optimiser l'ordonnancement temporel des pointages. Or l'ordonnancement des pointages est effectué en ligne, c'est à dire juste avant que ces pointages soient joués par le radar. Etant donné la combinatoire exponentielle de ce problème, il n'existe pas d'algorithme permettant, en un temps restreint, de donner une solution optimale. Il s'agit également d'un problème d'optimisation multicritère, qui consiste à la fois à maximiser la charge (contraintes temporelles) et à jouer les pointages les plus importants (priorités).

Dans les systèmes classiques des radars multifonction, on utilise des algorithmes simples, pouvant fonctionner en temps réel. Ces algorithmes simples subissent la surcharge mais ne la maîtrisent pas. Seule la priorité permet de gérer la surcharge en pénalisant les pointages les moins prioritaires. Ces pointages moins prioritaires sont soit retardés, soit non joués. Ceci a pour conséquence de rendre très rapidement la veille non opérationnelle (veille « mitée », période de rafraîchissement très longue).

Par distinction avec cet état de la technique, la régulation de charge selon l'invention est effectuée en amont de l'ordonnancement. Ceci permet de disposer de plus de temps et d'anticiper les éventuelles surcharges. Il est alors possible en cas de surcharge d'adopter une stratégie pour réduire la charge plus élaborée que dans les radars classiques.

Par ses caractéristiques, telles qu'elles seront décrites et revendiquées ci-après, l'invention vise à réguler la charge d'un radar, en utilisant d'autres critères que simplement la priorité des pointages, pour tenir compte des contraintes temporelles de l'ensemble des pointages.

Pour satisfaire à cet objectif et obtenir d'autres avantages qui ressortiront plus loin, l'invention a pour objet un procédé de régulation de charge d'un radar, caractérisé en ce qu'il est destiné à être mis en oeuvre avant l'étape d'ordonnancement en ligne et qu'il comprend au moins les étapes suivantes :
(a) une étape de simulation, au cours de laquelle on simule sur une à plusieurs trames l'ordonnancement de demandes de pointages, ces demandes de pointages comprenant des premières demandes de pointages non urgents qui sont destinés à être joués de manière périodique par le radar, et des secondes demandes de pointages urgents fictives qui sont générées de manière aléatoire, le résultat de la simulation étant positif si les premières et les secondes demandes de pointages peuvent tous être ordonnancées, le résultat étant négatif sinon ;
(b) une étape de réduction de charge si le résultat de la simulation est négatif, la réduction de la charge étant obtenue en agissant sur les premières demandes de pointages non urgents.

Dans le cadre d'un mode de réalisation avantageux, les secondes demandes de pointages sont générées de manière à ce qu'en moyenne le nombre de demandes de pointages urgents fictives générés par pointage périodiques soit conforme au taux de demandes de pointages urgents réellement générés.

Dans le cadre d'un mode de réalisation avantageux, les taux de demandes de pointages urgents réellement générés par pointage périodiques sont estimés sur les dernières trames :
- pour les demandes de pointages urgents de confirmation, à partir du taux de confirmation par position de veille ;
- pour les demandes de pointages urgents de ré-acquisition, à partir du taux de ré-acquisition par piste.

Dans le cadre d'un mode de réalisation avantageux, tant le résultat de la simulation est négatif, on répète les étapes de réduction de charge et de simulation.

Dans le cadre d'un mode de réalisation avantageux, lors de l'étape de réduction de charge, on supprime dans les premières demandes de pointages non urgents, celles dont la priorité est inférieure à une priorité déterminée, et on les place dans une liste secondaire qui sera utilisée lors de l'étape d'ordonnancement en ligne uniquement en présence de temps mort.

Dans le cadre d'un mode de réalisation avantageux, lors de l'étape de réduction de charge, parmi les premières demandes de pointages non urgent, on relaxe les contraintes temporelles des demandes de pointages dont la priorité est inférieure à une priorité déterminée, pour réduire la charge en rendant les pointages correspondant moins performants.

Dans le cadre d'un mode de réalisation avantageux, pour chaque demande de pointage non urgent étant associée plusieurs formes d'onde candidates, on relaxe les contraintes temporelles de cette demande de pointage en sélectionnant une forme d'onde candidate de durée inférieure à celle en cours (sélection d'une forme d'onde candidate plus courte et moins performante).

Dans le cadre d'un mode de réalisation avantageux, pour chaque demande de pointage non urgent étant associé plusieurs périodes de rafraîchissement candidates, on relaxe les contraintes temporelles de cette demande de pointage en sélectionnant une période de rafraîchissement candidate supérieure à celle en cours.

L'invention a pour principaux avantages, qu'elle permet d'anticiper les éventuelles surcharges, et de disposer de plus de temps pour modifier les caractéristiques des pointages (forme d'onde ou période) ou de les placer dans une liste secondaire, par exemple.

L'invention sera maintenant décrite de manière plus détaillée dans le cadre d'un exemple particulier de réalisation pratique. Dans le cours de cette description, on fera référence aux figures des dessins annexés, parmi lesquelles :
- la figure 1, un schéma synoptique, représente un exemple de gestion des pointages radar ;
- la figure 2, un schéma synoptique, représente un exemple de mise en oeuvre du procédé de régulation de l'invention selon un mode de réalisation avantageux.

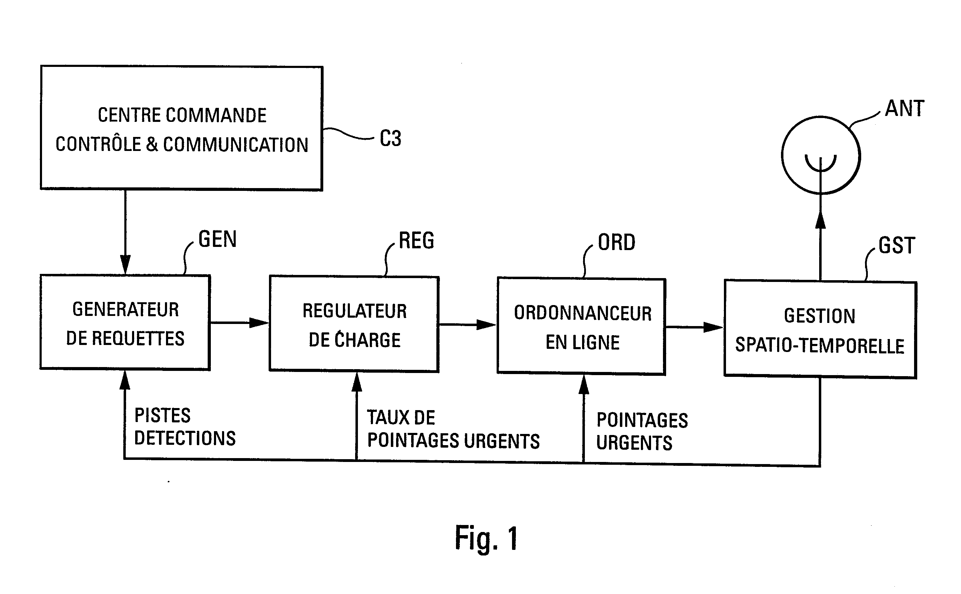

On se réfère maintenant à la figure 1. La fonction de gestion des pointages radar regroupe un générateur de requêtes de pointage GEN, un régulateur de charge REG selon l'invention, un ordonnanceur en ligne ORD, et un module de gestion spatio-temporelle GST. Le générateur de requête de pointage GEN crée des demandes de pointages en fonction d'informations provenant d'un centre de commande, contrôle et communication C3, et des données du radar (pistes en cours, détections, ...).

Ces informations comprennent un maillage courant de la veille, une liste de pistes à entretenir, et une liste de tâches urgentes. Les tâches urgentes peuvent être une confirmation ou une ré-acquisition. Le générateur de requête GEN crée une demande de pointage urgent pour chaque tâche urgente. Une confirmation est générée automatiquement après une détection en veille (c'est à dire lors d'un pointage de veille). Une ré-acquisition est générée automatiquement si une non détection intervient après l'exécution d'un pointage de poursuite. Les pointages de veilles et de poursuites sont périodiques, alors que les pointages urgents (confirmation, ré-acquisition) sont sporadiques.

Les demandes de pointages sont caractérisées par différents paramètres : une priorité et des contraintes temporelles d'exécution. Les contraintes temporelles d'exécution notamment :
- la durée du pointage,
- la date à partir de laquelle le pointage doit être exécuté, appelée date d'activation,
- la date avant laquelle le pointage doit être exécuté, appelée date d'échéance du pointage,
- la période nominale de rafraîchissement souhaitée ;
- la date d'exécution nominale du pointage (par exemple sans déflexion pour les radars à antenne tournante).

La durée du pointage est associée à la forme d'onde. La priorité d'un pointage est associé à la menace (la priorité est plus élevée pour des cibles rapides ou proches du radar par exemple). La période nominale de rafraîchissement dépend de plusieurs facteurs :
- pour la poursuite, elle dépend de la cinématique de la cible et de la capacité en cadence de fonctionnement du pistage, et
- pour la veille, elle dépend des contraintes géométriques de surveillance associées aux vitesses maximales des cibles.

En cas de détection par un pointage de veille, une demande de pointage urgent est générée. Cette demande de pointage urgent correspond à un pointage de confirmation. Ce pointage de confirmation doit être exécuté au plus tôt. Il peut être exécuté par exemple :
- en mode antenne tournante, dans le cône du tour d'antenne, et
- en mode antenne fixe, avant une certaine limite temporelle.

De façon similaire, après un pointage de poursuite ayant généré une non détection, une demande de pointage urgent est générée. Cette demande de pointage urgent correspond à un pointage de ré-acquisition. Ce pointage de ré-acquisition doit être exécuté avec les même contraintes temporelles que précédemment.

La liste des demandes de pointages est envoyée au régulateur de charge REG et à l'ordonnanceur en ligne ORD. Plus précisément, les demandes de pointage non urgent sont envoyées au régulateur de charge REG, et les demandes de pointages urgent sont envoyées directement à l'ordonnanceur en ligne ORD. Selon l'invention, le régulateur de charge REG limite la charge si nécessaire en tenant compte à la fois des priorités et des contraintes temporelles.

L'ordonnanceur en ligne ORD permet d'ordonnancer en trame de longueur temporelle spécifiée les demandes de pointages urgents et non urgents. En parallèle, lorsqu'une trame se construit, la précédente est jouée par l'antenne. Une trame longue permet d'avoir plus de temps pour optimiser l'ordonnancement mais empêche de gérer au plus vite les demandes de pointages urgents.

Une fois ordonnancée, la trame est envoyée à un module de gestion spatio-temporelle GST qui pilote l'antenne ANT pour jouer cette trame.

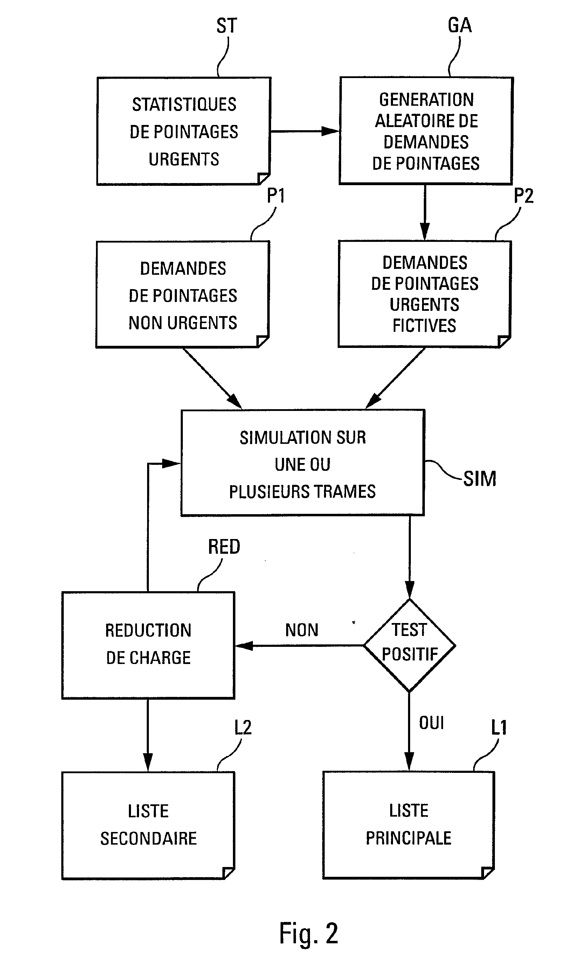

On se réfère maintenant à la figure 2. Le procédé de régulation mis en oeuvre par le régulateur de charge selon l'invention comprend au moins une étape de simulation SIM et une étape de réduction de la charge RED. L'étape de simulation SIM consiste à ordonnancer sur une à plusieurs trames des premières demandes de pointages non urgents P1 et des secondes demandes de pointages urgents P2. Lors de cette simulation, on applique l'algorithme utilisé par l'ordonnanceur en ligne ORD. Les premières demandes de pointages non urgents P1 sont les demandes de pointages périodiques qui sont destinées à être ordonnancées par l'ordonnanceur en ligne ORD. Elles sont transmises par le générateur de requêtes GEN. Les secondes demandes de pointages urgents P2 sont des demandes de pointages générées aléatoirement GA.

En effet, lors de cette simulation, les pointages non urgents n'étant pas réellement exécutés par le radar, aucune demande de pointage urgent réelle n'est générée à la date correspondant au temps simulé. En d'autres termes, sur la durée simulée on ne dispose pas a priori l'information sur les pointages urgents qui seront joués dans l'avenir, mais seulement une information sur les demandes de pointages périodiques. Cependant, il est possible de synthétiser une information à caractère statistique sur les taux de demandes de pointages urgents générées. Les secondes demandes de pointages urgents P2 utilisées lors de la simulation SIM sont donc des demandes de pointages fictives. Ces demandes fictives P2 permettent de rendre la simulation SIM la plus proche de la situation réelle. En effet, si on effectue la simulation SIM sans utiliser de demandes fictives P2, la charge du radar est sous estimée.

Avantageusement, les secondes demandes de pointages L2 sont générées GA de manière à ce qu'en moyenne le nombre de demandes de pointages urgents fictives générés par pointage périodiques soit conforme au taux de demandes de pointages urgents réellement générés ST. On peut utiliser à cet effet des pourcentages de confirmation par position de veille et pourcentage de ré-acquisition par piste.

Avantageusement, les taux de demandes de pointages urgents réellement générés par pointage périodiques ST peuvent être estimés sur les dernières trames :
- pour les demandes de pointages urgents de confirmation, à partir du taux de confirmation par position de veille ;
- pour les demandes de pointages urgents de ré-acquisition, à partir du taux de ré-acquisition par piste.

Le taux de confirmation par position de veille traduit un niveau courant de fausse alarme. Ce niveau peut être plus ou moins important en présence de fouillis.

Le taux de ré-acquisition par piste traduit la probabilité de nondétection liée à la cible pistée. La probabilité de non détection varie avec sa furtivité et/ou la cinématique de la cible.

Le résultat de la simulation SIM est positif si toutes les demandes de pointages P1 et P2 peuvent être ordonnancées (jusqu'à un niveau de priorité prédéterminé) et négatif sinon. Si le résultat de la simulation est positif, on n'anticipe aucune surcharge. Par conséquent toutes les demandes de pointages non urgents P1 peuvent être transmises à l'ordonnanceur en ligne. Si au contraire le résultat de la simulation est négatif, on anticipe une surcharge passant à l'étape de réduction de charge RED.

En d'autres termes, on ordonnance des demandes de pointages P1 et P2 sur une à plusieurs trames. Ces demandes de pointages comprennent les demandes de pointages périodiques connues P1, et des demandes de pointages fictives P2 générées à partir d'informations statistiques sur les demandes de pointages urgents. Ainsi, lorsqu'une demande de pointage de veille est ordonnancée en utilisant l'algorithme d'ordonnancement en ligne, on génère ou non une demande de pointage de confirmation. Cette demande de pointage de confirmation est générée de façon aléatoire, à partir du pourcentage de confirmation associé à cette demande de pointage de veille. De façon similaire, lorsqu'une demande de pointage de poursuite est ordonnancée, on génère ou non une demande de pointage de ré-acquisition. Cette demande de pointage de poursuite est générée de façon aléatoire, à partir du pourcentage de ré-acquisitions associé à cette demande de pointage de poursuite. Ainsi, on simule de façon statistique les taux de génération de demandes de pointages urgents. On ordonnance ainsi les demandes de pointages sur un horizon de planification en amont. Si l'une des demandes de pointages périodiques dépasse son échéance sans être ordonnancée, on passe l'étape de réduction de charge RED.

Lors de l'étape de réduction de charge RED, plusieurs stratégies sont possibles, notamment la relaxation des contraintes temporelles des demandes de pointages et le rejet de demandes de pointages dans une liste secondaire L2.

Selon une première stratégie avantageuse, on relaxe les contraintes temporelles d'une demande de pointage en jouant sur la forme d'onde du pointage. A chaque demande de pointage (non urgent) on associe plusieurs formes d'onde candidates. Chaque forme d'onde candidate correspond à une durée de pointage différente. La forme d'onde la plus performante est celle correspondant à la durée la plus longue. Si le résultat de la simulation SIM est négatif, on sélectionne pour les demandes de pointages au-dessous d'une certaine priorité, une forme d'onde candidate de durée inférieure à celle en cours. On peut alors passer à nouveau à l'étape de simulation SIM, et si besoin à l'étape de réduction de charge RED.

Selon une seconde stratégie avantageuse, on relaxe les contraintes temporelles d'une demande de pointage en jouant sur la période de rafraîchissement. A chaque demande de pointage (non urgent) on associe plusieurs périodes de rafraîchissement candidates. Une période de rafraîchissement plus élevée dégrade les performances du pointage, mais relaxe la contrainte temporelle de ce pointage. Si le résultat de la simulation SIM est négatif, on sélectionne pour les demandes de pointages au-dessous d'une certaine priorité, une forme période de rafraîchissement candidate supérieure à celle en cours. On peut alors passer à nouveau à l'étape de simulation SIM, et si besoin à l'étape de réduction de charge RED.

Ainsi, selon les premières et secondes stratégies de relaxation des contraintes temporelles, lors de l'étape de réduction de charge RED, parmi les premières demandes de pointages non urgent P1, on relaxe les contraintes temporelles des demandes de pointages dont la priorité est inférieure à une priorité déterminée, pour réduire la charge en rendant les pointages correspondant moins performants.

Selon une troisième stratégie avantageuse, on rejette des demandes de pointages dans la liste secondaire L2. Si le résultat de la simulation SIM est négatif, on supprime les demandes de pointages au-dessous d'une certaine priorité, et on les place dans la liste secondaire L2. Les autres demandes de pointages (non urgent) restent dans une liste principale L1 qui est transmise à l'ordonnanceur en ligne ORD. La liste secondaire L2 sera utilisée lors de l'étape d'ordonnancement en ligne qu'en cas de temps mort. Ainsi, on a surestimé la charge lors de la simulation SIM (pourcentage de confirmation et de ré-acquisition surévalués), les demandes de pointages rejetées ne sont pas perdues et pourront être sélectionnées si une sous-charge apparaît.

Ces stratégies peuvent être utilisées de façon successive jusqu'à ce que le résultat de la simulation devienne positif. En d'autres termes, tant que le résultat de la simulation est négatif, on peut répéter les étapes de réduction de charge RED et de simulation SIM. On peut commencer par prendre des formes d'onde candidates plus courtes (première stratégie). Si cela ne suffit pas, on peut prendre des périodes candidates plus longues (seconde stratégie). Si cela ne suffit toujours pas, on peut rejeter les demandes pointages périodiques les moins prioritaires dans la liste secondaire (troisième stratégie).

Ainsi, le régulateur de charge REG selon l'invention effectue une planification sur plusieurs trames, en amont de l'ordonnanceur en ligne. Pour limiter la charge, le régulateur de charge REG peut par exemple :
- limiter le nombre de demandes de pointages transmises à l'odronnanceur en ligne ORD, ou
- relaxer les contraintes temporelles des pointages périodiques.

Pour ce faire, on associe à chaque demande de pointage périodique, plusieurs formes d'onde et plusieurs périodes de rafraîchissement candidates. Si la forme d'onde la plus longue et rafraîchit le plus souvent est souhaitable, il peut être préférable de jouer un pointage en cas de surcharge avec une forme d'onde moins performante (durée plus courte) et une période moins optimale (période plus longue), plutôt que celuici ne soit pas exécuté.

La régulation de charge selon l'invention permet ainsi de gérer les contraintes temporelles (durée, période) ou de filtrer le nombre de demandes de pointages en fonction de la priorité, en fonction de la charge. Ceci permet de gérer la charge en amont de la chaîne d'ordonnancement des pointages. On évite ainsi de laisser l'ordonnanceur en ligne ORD gérer cette charge, en aval de la chaîne, avec uniquement la priorité comme arbitre et sans tenir compte des contraintes temporelles de l'ensemble des demandes de pointages.

Quoi qu'il en soit, pour être particulièrement avantageux, les modes de réalisation particuliers décrits n'en sont pas moins non limitatif, et diverses variantes, concernant notamment les détails qui ont été indiqués en exemples, resteront dans le cadre de l'invention objet du brevet.

## Revendications

1. Procédé de régulation de charge d'un radar, **caractérisé en ce qu'**il est destiné à être mis en oeuvre avant l'étape d'ordonnancement en ligne et qu'il comprend au moins les étapes suivantes :
(a) une étape de simulation (SIM), au cours de laquelle on simule sur une à plusieurs trames l'ordonnancement de demandes de pointages, ces demandes de pointages comprenant des premières demandes de pointages non urgents (P1) qui sont destinés à être joués de manière périodique par le radar, et des secondes demandes de pointages urgents fictives (P2) qui sont générées (GA) de manière aléatoire, le résultat de la simulation étant positif si les premières et les secondes demandes de pointages peuvent tous être ordonnancées, le résultat étant négatif sinon ;
(b) une étape de réduction de charge (RED) si le résultat de la simulation est négatif, la réduction de la charge étant obtenue en agissant sur les premières demandes de pointages non urgents.

2. Procédé de régulation selon la revendication 1, **caractérisé en ce que** les secondes demandes de pointages (L2) sont générées (GA) de manière à ce qu'en moyenne le nombre de demandes de pointages urgents fictives générés par pointage périodiques soit conforme au taux de demandes de pointages urgents réellement générés (ST).

3. Procédé de régulation selon la revendication 2, **caractérisé en ce que** les taux de demandes de pointages urgents réellement générés par pointage périodiques (ST) sont estimés sur les dernières trames :
- pour les demandes de pointages urgents de confirmation, à partir du taux de confirmation par position de veille ;
- pour les demandes de pointages urgents de ré-acquisition, à partir du taux de ré-acquisition par piste.

4. Procédé de régulation selon l'une quelconque des revendications précédentes, **caractérisé en ce que** tant le résultat de la simulation est négatif, on répète les étapes de réduction de charge (RED) et de simulation (SIM).

5. Procédé de régulation selon l'une quelconque des revendications précédentes, **caractérisé en ce que** lors de l'étape de réduction de charge (RED), on supprime dans les premières demandes de pointages non urgents (P1), celles dont la priorité est inférieure à une priorité déterminée, et on les place dans une liste secondaire (L2) qui sera utilisée lors de l'étape d'ordonnancement en ligne uniquement en présence de temps mort.

6. Procédé de régulation selon l'une quelconque des revendications précédentes, lors de l'étape de réduction de charge (RED), parmi les premières demandes de pointages non urgent (P1), on relaxe les contraintes temporelles des demandes de pointages dont la priorité est inférieure à une priorité déterminée, pour réduire la charge en rendant les pointages correspondant moins performants.

7. Procédé de régulation selon la revendication 6, **caractérisé en ce que** pour chaque demande de pointage non urgent étant associée plusieurs formes d'onde candidates, on relaxe les contraintes temporelles de cette demande de pointage en sélectionnant une forme d'onde candidate de durée inférieure à celle en cours.

8. Procédé de régulation selon la revendication 6, **caractérisé en ce que** pour chaque demande de pointage non urgent étant associé plusieurs périodes de rafraîchissement candidates, on relaxe les contraintes temporelles de cette demande de pointage en sélectionnant une période de rafraîchissement candidate supérieure à celle en cours.
